# EUROPÄISCHE PATENTANMELDUNG

(11) **EP 3 929 018 A1**
(43) Veröffentlichungstag der Anmeldung: **29.12.2021**
(21) Anmeldenummer: 21161345.0
(22) Anmeldetag: 08.03.2021
(51) Int. Cl.: B60L 1/00, B60L 50/51, B60L 50/60, H02J 1/02

(54) **HOCHVOLT-BORDNETZSYSTEM EINES FAHRZEUGS UND VERFAHREN ZUR HERSTELLUNG EINES SOLCHEN HOCHVOLT-BORDNETZSYSTEMS**

(30) Priorität: 25.06.2020 DE 102020207857
(71) Anmelder: VOLKSWAGEN AG, 38440 Wolfsburg (DE)
(72) Erfinder: Willmann, Benjamin, 39245 Gommern OT Dannigkow (DE); Reichardt, Franz, 38547 Calberlah (DE); Näther, Holger, 38524 Sassenburg (DE)

(57) **Zusammenfassung**

Die Erfindung betrifft ein HV-Bordnetzsystem eines Fahrzeugs, wobei das HV-Bordnetzsystem (1) eine Hochspannungsquelle (2), eine zentralen Zwischenkreiskapazität (3) und mindestens zwei Hochvoltkomponenten (4, 4a, ..., 4g) umfasst, wobei die Pluspolanschlüsse der Hochvoltkomponenten (4, 4a, ..., 4g) jeweils mit dem Pluspolanschluss der zentralen Zwischenkreiskapazität (3) und die Minuspolanschlüsse der Hochvoltkomponenten (4, 4a, ..., 4g) jeweils mit dem Minuspolanschluss der zentralen Zwischenkreiskapazität (3) verbunden sind, wobei Anschlüsse der zentralen Zwischenkreiskapazität (3) und die Anschlüsse mindestens einer der Hochvoltkomponenten (4, 4a, ..., 4g) über eine niederinduktive Leiteranordnung (7) elektrisch verbunden sind, deren Induktivitätsbelag kleiner als 0,2 µH/m ist, wobei diese mindestens eine Hochvoltkomponente (4, 4a,..., 4g) derart mit der zentralen Zwischenkreiskapazität (3) elektrisch verbunden ist, dass eine aus einer Anschlusskapazität der Hochvoltkomponente (4, 4a,..., 4g) und einer Verbindungskapazität der elektrischen Verbindung zwischen der Hochvoltkomponente (4, 4a,... , 4g) und der zentralen Zwischenkreiskapazität (3) resultierende Kapazität kleiner als oder gleich 100 µF ist und ein Verfahren zur Herstellung eines solchen Hochvolt-Bordnetzsystems.

## Beschreibung

Die Erfindung betrifft ein Hochvolt-Bordnetzsystem eines Fahrzeugs sowie ein Verfahren zur Herstellung eines solchen Hochvolt-Bordnetzsystems.

Aus dem Stand der Technik bekannt sind Hochvolt-Bordnetzsysteme (HV-Bordnetzsysteme) eines Fahrzeugs, die verschiedene Hochvoltkomponenten (HV-Komponenten) umfassen, wobei diese Hochvoltkomponenten jeweils sogenannte verteilte Zwischenkreiskapazitäten aufweisen. Sind diese Hochvoltkomponenten in dem Hochvolt-System verbunden, können unerwünschte Ausgleichsströme zwischen diesen verteilten Zwischenkreiskapazitäten auftreten. Diese Ausgleichsströme schmälern in unerwünschter Weise einen Wirkungsgrad und auch eine Reichweite eines elektrisch fahrbaren Fahrzeugs. Ferner führen diese Ausgleichsströme zu unerwünschten Alterungseffekten der Hochvoltkomponenten. Ein weiterer Nachteil ist, dass die Ausgleichsströme die elektromagnetische Verträglichkeit (EMV) des HV-Bordnetzsystems beeinflussen können. Da diese Ausgleichsströme bei der Auslegung der HV-Komponenten in der Regel nicht betrachtet werden, können diese Ausgleichsströme dazu führen, dass kostenintensive nachträgliche Maßnahmen zur Verbesserung der EMV erforderlich werden. Ferner erzeugen die Ausgleichsströme ebenfalls magnetische Felder, die ebenfalls unerwünscht sind. Ein weiterer, nachteiliger Effekt verteilter Zwischenkreiskapazitäten sind Resonanzeffekte, die sich aufgrund dieser weiteren Zwischenkreiskapazitäten und im HV-Bordnetzsystem vorhandenen Induktivitäten bilden. Diese Resonanzeffekte können ebenfalls zu vorzeitigen Alterungseffekten und zu einer unerwünschten Beeinträchtigung der Hochvoltkomponenten führen. Ebenfalls kann eine Hochvoltbatterie im HV-Bordnetzsystem durch Strom- und Spannungspulse, die aufgrund der verteilten Zwischenkreiskapazitäten entstehen, belastet werden, was eine Lebensdauer der Hochvoltbatterie und insbesondere der darin verbauten Hochvolt-Batteriemodule verringern kann.

Aus dem Stand der Technik bekannt ist die DE 10 2005 026 779 A1, die eine elektrische Antriebseinrichtung umfassend eine mehrsträngige elektrische Maschine, eine Mehrzahl von elektrischen Leistungsendstufen sowie mit den elektrischen Leistungsendstufen verbundene Mittel zur Steuerung und/oder Regelung der elektrischen Maschine umfasst. Hierbei ist offenbart, dass Leistungsendstufengruppen über eine kapazitive Speichereinrichtung miteinander gekoppelt sind, wobei ein gemeinsamer Zwischenkreiskondensator vorzugsweise zwischen einem gemeinsamen Kollektoranschluss und einem gemeinsamen Emitteranschluss der beiden Leistungsendstufengruppen angeordnet ist.

Weiter bekannt ist die DE 10 2011 087 946 A1, die eine Antriebsanordnung eines Fahrzeugs mit einem Verbrennungsmotor und einem elektrisch stufenlos leistungsverzweigten Getriebe offenbart. Ferner offenbart ist ein elektrischer Zwischenkreis, der zumindest eine erste von dem Verbrennungsmotor angetriebene elektrische Maschine als Generator und zumindest eine mit dem Getriebe verbundene zweite elektrische Maschine als Motor umfasst. Ferner ist offenbart, dass dem Zwischenkreis zumindest ein elektrischer Nebenantrieb für einen Nebenverbraucher des Fahrzeugs zugeordnet sein kann.

Ebenfalls offenbart ist, dass neben den in dem Zwischenkreis durch die vorhandenen Bauteile vorgesehenen Kapazitäten zusätzlich eine zentrale Zwischenkreiskapazität vorgesehen sein kann. Ebenfalls aus dem Stand der Technik bekannt ist die DE 10 2013 019 899 A1, die ein Verfahren zum Betrieb einer Mehrzahl von Elektromotoren offenbart. Weiter offenbart ist, dass Leistungselektroniken der Elektromotoren über eine Synchronisationsleitung verbunden sind und ein Zwischenkreis einen gemeinsamen Zwischenkreiskondensator für mindestens einen Teil der Mehrzahl von Elektromotoren umfasst.

Weiter bekannt ist die DE 10 2013 225 244 A1, die einen Umrichter offenbart. Weiter offenbart ist ein Mehrspannungsnetz mit mehreren Umrichtern und eine Zwischenkreiskapazität, wobei die Zwischenkreiskapazität eine erste und eine zweite Teilkapazität umfasst, wobei diese Teilkapazitäten in Reihe geschaltet sind, wobei ein erster Umrichter parallel zu der ersten Teilkapazität geschaltet ist und ein zweiter Umrichter parallel zu der Reihenschaltung aus erster und zweiter Teilkapazität geschaltet ist.

Keine der angeführten Entgegenhaltungen offenbart Details zur zentralen Zwischenkreiskapazität im HV-Bordnetzsystem.

Weiter weisen an einen Zwischenkreis angeschlossene Hochvoltkomponenten in der Regel eine eigene Kapazität auf, die auch als Anschlusskapazität bezeichnet werden kann. Die Anschlusskapazität bezeichnet hierbei die Kapazität zwischen einem Pluspolanschluss und einem Minuspolanschluss der Hochvoltkomponente. Diese dient dazu, einen kurzfristigen, hohen Leistungsverbrauch der Hochvoltkomponente zu ermöglichen, der aufgrund der Induktivität sowie der begrenzten Isolationseigenschaften der verwendeten Verbindungskabel zum Anschluss der Hochvoltkomponente nicht alleinig durch eine speisende Hochspannungsquelle abgedeckt werden kann und/oder EMV-Probleme erzeugt. Diese Anschlusskapazitäten erzeugen jedoch erhöhte Herstellungskosten und Bauraumbedarf für die jeweilige Hochvoltkomponente.

Es stellt sich daher das technische Problem, ein Hochvolt-Bordnetzsystem und ein Verfahren zur Herstellung eines solchen Hochvolt-Bordnetzsystems zu schaffen, die die vorhergehend erläuterten Nachteile vermeiden, insbesondere Ausgleichsströme zwischen mehreren verteilten Zwischenkreiskapazitäten von einzelnen Hochvoltkomponenten, die Herstellungskosten sowie den Bauraumbedarf der Hochvoltkomponenten reduzieren.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein HV-Bordnetzsystem eines Fahrzeugs. Das Fahrzeug kann insbesondere ein Kraftfahrzeug sein. Das HV-Bordnetzsystem umfasst eine Hochspannungsquelle, eine zentrale Zwischenkreiskapazität und mindestens zwei Hochvoltkomponenten. Die Hochspannungsquelle kann vorzugsweise eine Hochvoltbatterie, insbesondere eine Traktionsbatterie, des Fahrzeugs sein. Somit kann durch die Hochvoltbatterie elektrische Energie zum Betrieb einer elektrischen Maschine zum Antrieb des Fahrzeugs gespeichert sein. Die zentrale Zwischenkreiskapazität kann als Kondensator ausgebildet sein. In diesem Fall kann das Fahrzeug insbesondere ein Elektrofahrzeug oder ein Hybrid-Fahrzeug sein. Alternativ kann die Hochspannungsquelle jedoch auch einen Generator und eine Antriebsmaschine zum Antrieb des Generators, z.B. eine Verbrennungskraftmaschine, umfassen. In diesem Fall kann das Fahrzeug auch als Fahrzeug mit einer solchen Verbrennungskraftmaschine ausgebildet sein.

Eine Hochvoltkomponente bezeichnet hierbei eine Komponente, die elektrische Energie umwandelt, z.B. in mechanische oder thermische Energie. Insbesondere ist ein Hochvoltverteiler keine Hochvoltkomponente.

Selbstverständlich kann das HV-Bordnetzsystem auch mehr als zwei Hochvoltkomponenten umfassen. Exemplarische Hochvoltkomponenten werden nachfolgend noch näher erläutert. Die Zwischenkreiskapazität bezeichnet hierbei die Kapazität eines Kondensators und ist als von einer Spannung abhängige Ladungsmenge definiert. Die Zwischenkreiskapazität kann in Farad (F) angegeben sein.

Das HV-Bordnetzsystem kann hierbei ein Gleichspannungssystem mit einem Spannungsniveau von beispielsweise 400 V oder 800 V sein.

Die mindestens zwei Hochvoltkomponenten können hierbei Komponenten verschiedenen Typs sein. So kann beispielsweise eine erste Hochvoltkomponente eine Antriebseinrichtung sein oder umfassen. Eine weitere Hochvoltkomponente kann keine Antriebseinrichtung sein bzw. keine Antriebseinrichtung umfassen.

Die Pluspolanschlüsse der Hochvoltkomponenten sind jeweils mit dem Pluspolanschluss der zentralen Zwischenkreiskapazität elektrisch verbunden. Entsprechend sind die Minuspolanschlüsse der Hochvoltkomponenten jeweils mit dem Minuspolanschluss der zentralen Zwischenkreiskapazität verbunden. Hierbei weist ein Pluspolanschluss der Zwischenkreiskapazität bzw. der HV-Komponente in einem bestimmungsgemäßen Betrieb des HV-Bordnetzsystems ein höheres Potential als der Minuspolanschluss auf. Ein Anschluss kann einen elektrischen Anschluss als auch ein mechanisches Mittel zur Herstellung einer elektrischen Verbindung, z.B. eine Klemme, bezeichnen. Die elektrische Verbindung kann hierbei eine dauerhafte elektrische Verbindung sein. Allerdings ist es auch möglich, dass die elektrische Verbindung ein Schaltelement, insbesondere ein Trennschaltelement, umfasst und die jeweiligen Anschlüsse über dieses Schaltelement miteinander verbunden bzw. verbindbar sind. Insbesondere können in einem geöffneten Zustand des Schaltelements die über das Schaltelement verbundenen Anschlüsse elektrisch nicht miteinander verbunden sein, wobei die jeweiligen Anschlüsse in einem geschlossenen Zustand des Schaltelements elektrisch miteinander verbunden sind.

Die mit der zentralen Zwischenkreiskapazität derart verbundenen Hochvoltkomponenten sind insbesondere Hochvoltkomponenten, die mindestens ein leistungselektronisches Element umfassen, z.B. Traktionsumrichter oder ein elektrischer Klimakompressor.

Insbesondere kann das HV-Bordnetzsystem also ein erstes Anschlusspaar zum Anschluss einer ersten Hochvoltkomponente und mindestens ein weiteres Anschlusspaar zum Anschluss einer weiteren Hochvoltkomponente umfassen, wobei ein Pluspolanschluss des ersten Anschlusspaares mit dem Pluspolanschluss der ersten Hochvoltkomponente und ein Minuspolanschluss des ersten Anschlusspaares mit dem Minuspolanschluss der ersten Hochvoltkomponente elektrisch verbunden sind. Entsprechend ist ein Pluspolanschluss des weiteren Anschlusspaares mit dem Pluspolanschluss der weiteren Hochvoltkomponente und ein Minuspolanschluss des weiteren Anschlusspaares mit dem Minuspolanschluss der weiteren Hochvoltkomponente verbunden. Die Pluspolanschlüsse der Anschlusspaare sind jeweils mit dem Pluspolanschluss der Zwischenkreiskapazität und die Minuspolanschlüsse der Anschlusspaare mit dem Minuspolanschluss der zentralen Zwischenkreiskapazität verbunden.

Erfindungsgemäß sind Anschlüsse der zentralen Zwischenkreiskapazität und Anschlüsse mindestens einer der Hochvoltkomponenten über eine niederinduktive Leiteranordnung elektrisch verbunden, deren Induktivitätsbelag kleiner als oder gleich 0,2 µH/m ist. Weiter ist diese mindestens eine Hochvoltkomponente derart mit der zentralen Zwischenkreiskapazität verbunden, dass eine aus einer Anschlusskapazität der Hochvoltkomponente und einer Verbindungskapazität der elektrischen Verbindung zwischen der Hochvoltkomponente und der zentralen Zwischenkreiskapazität resultierende Kapazität kleiner als oder gleich 100 µF ist. Es ist möglich, dass die Anschlusskapazität der Hochvoltkomponente kleiner als oder gleich 100 µF ist, insbesondere wenn keine Verbindungskapazität vorhanden ist (z.B. wenn die Hochvoltkomponenten nicht über ein zusätzliches kapazitives Element an die zentrale Zwischenkreiskapazität angeschlossen ist). Existiert jedoch eine von Null verschiedene Verbindungskapazität, beispielsweise weil die Hochvoltkomponente mit ihrer Anschlusskapazität über ein (weiteres) kapazitives Element an die zentrale Zwischenkreiskapazität angeschlossen ist, so kann die Anschlusskapazität, abhängig von der Größe der Verbindungskapazität, kleiner als 100 µF sein.

Es ist auch möglich, dass Anschlüsse der zentralen Zwischenkreiskapazität und Anschlüsse mehrerer, aber nicht aller, oder aber Anschlüsse aller Hochvoltkomponenten jeweils über eine niederinduktive Leiteranordnung elektrisch verbunden sind, deren Induktivitätsbelag kleiner als oder gleich 0,2 µH/m sind. Weiter sind diese Hochvoltkomponenten jeweils derart mit der zentralen Zwischenkreiskapazität verbunden, dass eine aus einer Anschlusskapazität der jeweiligen Hochvoltkomponente und einer Verbindungskapazität der elektrischen Verbindung zwischen der jeweiligen Hochvoltkomponente und der zentralen Zwischenkreiskapazität resultierende Kapazität kleiner als oder gleich 100 µF ist.

Hierbei ermöglicht der beanspruchte Induktivitätsbelag, dass ein kurzfristiger, hoher Leistungsverbrauch einer Hochvoltkomponente durch die zentrale Zwischenkreiskapazität abgedeckt werden kann, insbesondere da die niedrige Induktivität die hierfür erforderliche Spannungsänderung an den Anschlüssen der Hochvoltkomponente nicht oder nur in geringem Maße begrenzt. Dies wiederum ermöglicht, Hochvoltkomponenten mit gering dimensionierten Zwischenkreiskapazitäten zu verwenden, was den Bauraumbedarf und die Herstellungskosten des Bordnetzsystems verringert. Weiter können durch derart reduzierte Anschlusskapazitäten der Hochvoltkomponenten auch die erläuterten Ausgleichsströme reduziert werden.

In einer weiteren Ausführungsform ist eine Anschlusskapazität mindestens einer Hochvoltkomponenten kleiner als 100 µF. In einer besonders bevorzugten Ausführungsform ist weist die Hochvoltkomponente keine Anschlusskapazität, also eine Anschlusskapazität von Null auf. Bevorzugt ist die Anschlusskapazität einer oder aller Hochvoltkomponente(n), die über die erläuterte niederinduktive Leiteranordnung mit der Zwischenkreiskapazität verbunden ist/sind, (jeweils) kleiner als 100 µF.

Hierdurch ergibt sich in vorteilhafter Weise eine besonders starke Reduktion der vorhergehend erläuterten Ausgleichsströme mit den entsprechend erläuterten Vorteilen sowie eine besonders hohe Reduktion des Bauraumbedarfs und der Herstellungskosten.

In einer weiteren Ausführungsform umfasst mindestens eine der Hochvoltkomponenten einen Traktionsumrichter. In diesem Fall kann die Hochvoltkomponente auch eine Traktionsmaschine, insbesondere eine elektrische Maschine, umfassen, die mit dem Traktionsumrichter verbunden ist.

Eine weitere der Hochvoltkomponente umfasst einen Gleichspannungswandler oder ist als solcher ausgebildet. Alternativ umfasst die weitere der Hochvoltkomponenten ein Ladegerät oder ist als solches ausgebildet. Weiter alternativ umfasst die weitere der Hochvoltkomponenten einen elektrischen Klimakompressor oder ist als solcher ausgebildet. Weiter alternativ umfasst die weitere der Hochvoltkomponenten eine Antriebseinrichtung oder ist als solche ausgebildet. Somit umfasst das HV-Bordnetzsystem also mindestens einen Traktionsumrichter sowie mindestens eine der wie erläutert alternativ ausgebildete Hochvoltkomponente. Selbstverständlich ist es möglich, dass das HV-Bordnetzsystem genau einen Traktionsumrichter oder aber mehrere Traktionsumrichter und genau eine weitere oder aber mehrere der wie vorhergehend erläuterten weiteren Hochvoltkomponenten umfasst.

Hierdurch ergibt sich in vorteilhafter Weise, dass eine Vielzahl von Hochvoltkomponenten mit der zentralen Zwischenkreiskapazität verbunden sein können, wodurch auch - wie vorhergehend erläutert - die Ausgleichsströme zwischen Kapazitäten dieser Hochvoltkomponenten reduziert werden können und sich somit die vorhergehend erläuterten Nachteile dieser Ausgleichsströme signifikant reduzieren.

In einer weiteren Ausführungsform ist die zentrale Zwischenkreiskapazität in die Hochspannungsquelle, insbesondere in die Hochvoltbatterie, integriert. Dies kann bedeuten, dass eine (interne) Kapazität der Hochspannungsquelle derart ausgelegt/dimensioniert ist, dass sie den für die zentrale Zwischenkreiskapazität gewünschten Kapazitätswert aufweist. In diesem Fall kann die zentrale Zwischenkreiskapazität in einem Gehäuse der Hochspannungsquelle angeordnet sein. In diesem Gehäuse können z.B. Batteriemodule der Hochvoltbatterie angeordnet sein.

Alternativ sind Anschlüsse der Hochspannungsquelle unmittelbar mit Anschlüssen der zentralen Zwischenkreiskapazität elektrisch verbunden. Dies kann bedeuten, dass ein elektrischer Widerstand zwischen den unmittelbar verbundenen Anschlüssen 0 ist oder kleiner als 0,1 Ohm ist.

Weiter alternativ sind Anschlüsse der Hochspannungsquelle mit Anschlüssen der zentralen Zwischenkreiskapazität über eine niederinduktive Leiteranordnung elektrisch verbunden, deren Induktivitätsbelag kleiner als oder gleich 0,2 µH/m ist. Eine exemplarische Ausbildung einer solchen niederinduktiven Leiteranordnung wird nachfolgend näher erläutert.

Durch die erläuterten Alternativen zur Anordnung der zentralen Zwischenkreiskapazität wird in vorteilhafter Weise ermöglicht, Kapazitäten der einzelnen Hochvoltkomponenten zu reduzieren und dementsprechend also Hochvoltkomponenten mit derart reduzierten Kapazitäten an das HV-Bordnetzsystem anzuschließen, wodurch sich die eingangs erläuterten Ausgleichsströme, insbesondere deren Höhe, beim Betrieb des HV-Bordnetzsystems reduzieren. Dementsprechend können die ebenfalls eingangs erläuterten Nachteile, insbesondere die durch die Ausgleichsströme bedingten Alterungseffekte, die Stärke der durch die Ausgleichsströme bedingten magnetischen Felder und die Häufigkeit sowie die Höhe der Strom- und Spannungspulse, reduziert und die EMV des HV-Bordnetzsystems verbessert werden.

Die niederinduktive Verbindung ermöglicht besonders vorteilhafterweise eine reduzierte Dimensionierung der Zwischenkreiskapazität, wodurch Herstellungskosten und Bauraumanforderungen bei der Herstellung des HV-Bordnetzsystems reduziert werden können. Weiter alternativ ist die zentralen Zwischenkreiskapazität in eine Hochvoltkomponente integriert. Dies kann bedeuten, dass die Anschlusskapazität der Hochvoltkomponente derart ausgelegt/dimensioniert ist, dass sie den für die zentrale Zwischenkreiskapazität gewünschten Kapazitätswert aufweist. In diesem Fall kann die zentrale Zwischenkreiskapazität in einem Gehäuse der Hochvoltkomponente angeordnet sein. In diesem Fall ist es möglich, dass das HV-Bordnetzsystem mindestens drei Hochvoltkomponenten umfasst, wobei in einer dieser Hochvoltkomponenten die zentralen Zwischenkreiskapazität integriert ist. Weiter können in diesem Fall Anschlüsse der Hochspannungsquelle mit Anschlüssen der zentralen Zwischenkreiskapazität über eine niederinduktive Leiteranordnung elektrisch verbunden, deren Induktivitätsbelag kleiner als oder gleich 0,2 µH/m ist.

Weiter alternativ ist die zentrale Zwischenkreiskapazität in eine Hochvoltverteileinrichtung (Hochvoltverteiler) integriert. In diesem Fall kann die zentrale Zwischenkreiskapazität in einem Gehäuse der Hochvoltverteileinrichtung angeordnet sein. In diesem Fall ist es möglich, dass das HV-Bordnetzsystem mindestens zwei Hochvoltkomponenten sowie eine Hochvoltverteileinrichtung umfasst. Weiter können in diesem Fall Anschlüsse der Hochspannungsquelle mit Anschlüssen der zentralen Zwischenkreiskapazität über eine niederinduktive Leiteranordnung elektrisch verbunden, deren Induktivitätsbelag kleiner als oder gleich 0,2 µH/m ist. Die Hochvoltverteileinrichtung bezeichnet hierbei eine Einrichtung bezeichnen, in der Plusleitungen und/oder Minusleitungen von mehreren Zwischenkreisen oder Teilkreisen eines Zwischenkreises zusammengeführt werden.

Durch diese Ausführungsformen wird in vorteilhafter Weise ein Bauraumbedarf des HV-Bordnetzsystems reduziert, da keine Integration einer als separates Bauelement ausgebildeten zentralen Zwischenkreiskapazität erfolgen muss.

In einer weiteren Ausführungsform ist mindestens ein Anschluss der zentralen Zwischenkreiskapazität über ein Trennschaltelement mit einem Anschluss der Hochspannungsquelle verbunden. Das Trennschaltelement kann insbesondere ein Batterieschütz sein. Es ist möglich, dass sowohl der Pluspol- als auch der Minuspolanschluss der zentralen Zwischenkreiskapazität jeweils über ein Trennschaltelement mit dem entsprechenden Anschluss der Hochspannungsquelle verbunden ist. In diesem Fall kann die zentrale Zwischenkreiskapazität nicht in die Hochspannungsquelle integriert, insbesondere nicht in einem Gehäuse der Hochspannungsquelle angeordnet, sein. Insbesondere können also die zentrale Zwischenkreiskapazität und die Hochspannungsquelle in dieser Ausführungsform als baulich separat voneinander ausgebildete Einheiten ausgebildet sein. Hierdurch ergibt sich in vorteilhafter Weise, dass verfügbare Hochspannungsquellen, insbesondere mit nicht wie vorhergehend erläutert angepasster Kapazität, verwendet werden können, um das vorgeschlagene HV-Bordnetzsystem bereitzustellen. Hierdurch können sich insbesondere Herstellungskosten für das HV-Bordnetzsystem reduzieren.

In einer alternativen Ausführungsform ist mindestens ein Anschluss der zentralen Zwischenkreiskapazität dauerhaft mit einem Anschluss der Hochspannungsquelle verbunden. Selbstverständlich können auch beide Anschlüsse der zentralen Zwischenkreiskapazität dauerhaft, also nicht über ein Trennschaltelement, mit dem jeweiligen Anschluss der Hochspannungsquelle verbunden sein. Dies kann insbesondere dann der Fall sein, falls die zentrale Zwischenkreiskapazität unmittelbar mit den Anschlüssen der Hochspannungsquelle verbunden ist oder die zentrale Zwischenkreiskapazität in die Hochspannungsquelle integriert ist. Weiter sind die Hochvoltkomponenten über mindestens ein Trennschaltelement mit dem Anschluss der Hochspannungsquelle bzw. mit der zentralen Zwischenkreiskapazität verbunden. Auch in diesem Fall kann das Trennschaltelement ein Batterieschütz sein. Ist das Trennschaltelement ein Batterieschütz, so kann die zentrale Zwischenkreiskapazität insbesondere in die Hochspannungsquelle integriert sein.

Bei dieser Ausführungsform ergibt sich in vorteilhafter Weise, dass die zentrale Zwischenkreiskapazität beim Öffnen des Trennschaltelements vom verbleibenden HV-Bordnetzsystem getrennt wird und somit keinerlei Anforderungen bezüglich einer Entladezeit im Kollisionsfall einhalten muss. Hierdurch können Herstellungskosten der zentralen Zwischenkreiskapazität und somit auch des HV-Bordnetzsystems reduziert werden.

In einer weiteren Ausführungsform weist die niederinduktive Leiteranordnung mindestens (2n+1) Flachleitungen auf, wobei davon n Flachleitungen von einem ersten Leitungstyp und n+1 Flachleitungen von einem zweiten Leitungstyp sind und wobei die (2n+1) Flachleitungen derart übereinander angeordnet sind, dass die Flachleitungen vom ersten Leitungstyp und vom zweiten Leitungstyp abwechselnd übereinander angeordnet sind, wobei jeweils außen eine Flachleitung vom zweiten Leitungstyp angeordnet ist. Eine Leitung kann hierbei auch als Leiter bezeichnet werden. Eine derart ausgebildete niederinduktive Leiteranordnung ist in der nachveröffentlichten DE 10 2019 204 215.5 offenbart. Durch die erläuterte Ausbildung der niederinduktiven Leiteranordnung ergibt sich in vorteilhafter Weise, dass Emissionen elektromagnetischer Strahlung erheblich reduziert werden können, sodass eine aufwendige Schirmung der Leitungen der Leiteranordnung entfallen kann. Weiter ergibt sich in vorteilhafter Weise, dass Flachleitungen unterschiedlicher Polung wie ein Plattenkondensator wirken und somit elektrische Energie speichern können, wodurch das vorgeschlagene HV-Bordnetzsystem (zusätzlich) stabilisiert werden kann, da die Leiteranordnung einen definierbaren Energiepuffer bildet. Ebenfalls ergibt sich in vorteilhafter Weise, dass Filterelemente zur Gewährleistung der EMV aufgrund der Speicherfähigkeit der Flachleitungen reduziert werden können. Mittels der Flachleitungen werden ebenfalls hinreichend genaue definierbare Kapazitäten geschaffen. Diese Kapazitäten können Differential-Mode und Common-Mode-Störungen reduzieren und bei der Auslegung von EMV-Filtern berücksichtigt werden. Somit können vorteilhaft Kosten und Bauraum für entsprechende Filterelemente eingespart werden. Ebenso ergibt sich in vorteilhafter Weise, dass aufgrund flacher und parallel ausgerichteter Leitungen Energie eingespart werden kann, da Leitungsverluste reduziert werden können. Ein weiterer Vorteil besteht in dem Umstand, dass an den Außenseiten der Leiteranordnung Leitungen mit gleichem Potential angeordnet sind. Hierdurch kann das Risiko minimiert werden, dass eine Person unbeabsichtigt Leitungen unterschiedlichen Potentials berührt, was einem Kurzschluss gleich kommt. Somit wird eine Betriebssicherheit verbessert. Entsprechend wird noch das Risiko minimiert, dass ein elektrisch leitfähiges Bauteil, beispielsweise ein Abschnitt der Fahrzeugkarosserie, Leitungen unterschiedlichen Potentials gleichzeitig berührt. Auch ist das Leitungspaket, bestehend aus den übereinander angeordneten Flachleitungen, deutlich starrer und eigenstabiler als bisher in der Regel verwendete (flexible) Rundkabel, wodurch der Automatisierungsgrad bei der Verlegung der Kabel deutlich erhöht werden kann. Zudem sind deutlich weniger Befestigungsmittel für die Fixierung des Kabelpakets notwendig, wodurch Produktionskosten reduziert werden können. Ebenfalls ergibt sich in vorteilhafter Weise, dass Höhe/Stärke der vorhergehend erläuterten Magnetfelder gesenkt werden kann und sich somit ebenfalls eine verbesserte Betriebssicherheit ergibt. Ferner wird durch eine solche Leiteranordnung in vorteilhafter Weise ermöglicht, dass Spannungsschwankungen insbesondere beim Betrieb einer elektrischen Maschine, die Teil einer Hochvoltkomponente sein kann, reduziert werden können.

Weiter kann eine durch die Leiteranordnung bereitgestellte Kapazität die vollständige zentrale Zwischenkreiskapazität oder einen Teil davon ausbilden.

Weiter kann die Summe der Leitungsquerschnitte aller Flachleitungen vom ersten Leitungstyp gleich der Summe aller Leitungsquerschnittsflächen aller Flachleitungen vom ersten Leitungstyp gleich der Summe aller Leitungsquerschnittsflächen aller Flachleitungen vom zweiten Leitungstyp sein. Hierdurch wird in besonders vorteilhafter Weise eine Auslöschung der Magnetfelder beider Leitungstypen begünstigt und somit die Emission elektromagnetischer Strahlung weiter verringert.

Weitere vorteilhafte Ausgestaltungen der niederinduktiven Leiteranordnung ergeben sich durch die in den Ansprüchen der nachveröffentlichten DE 10 2019 204 215.5 beanspruchten Ausführungsformen, auf die hiermit vollumfänglich Bezug genommen wird. Insbesondere kann also die niederinduktive Leiteranordnung gemäß einer der in der DE 10 2019 204 215.5 beschriebenen Ausführungsformen, insbesondere einer der beanspruchten Ausführungsformen, weitergebildet sein. Entsprechende Vorteile ergeben sich ebenfalls aus dem Offenbarungsgehalt der nachveröffentlichten DE 10 2019 204 215.5.

Es ist weiter möglich, dass das Hochvolt-Bordnetzsystem mehrere Teilsysteme umfasst, wobei an verschiedene Teilsysteme jeweils mindestens zwei Hochvoltkomponenten angeschlossen sind bzw. von dem Teilsystem umfasst werden. Weiter sind die mehreren Teilsysteme jeweils mit der zentralen Zwischenkreiskapazität verbunden. Es ist möglich, dass ein Teilsystem eine (weitere) Kapazität, insbesondere in Form eines Kondensators, umfasst.

In einer weiteren Ausführungsform ist mindestens eine weitere Hochvoltkomponente oder ein Hochvoltverteiler unmittelbar an die Hochspannungsquelle angeschlossen. Dies bedeutet, dass ein Pluspolanschluss der Hochvoltkomponente/des Hochvoltverteilers mit dem Pluspolanschluss der Hochspannungsquelle und ein Minuspolanschluss der Hochvoltkomponente/des Hochvoltverteilers mit einem Minuspolanschluss der Hochspannungsquelle verbunden ist, insbesondere nicht über die Anschlüsse der zentralen Zwischenkreiskapazität. Mit anderen Worten ist also diese mindestens eine weitere Hochvoltkomponente/dieser Hochvoltverteiler nicht über die zentrale Zwischenkreiskapazität mit der Hochspannungsquelle verbunden. Ist ein Hochvoltverteiler unmittelbar an die Hochspannungsquelle angeschlossen, so kann an diesen Hochvoltverteiler wiederum mindestens eine Hochvoltkomponenten angeschlossen sein.

Insbesondere können Hochvoltkomponenten unmittelbar an die Hochspannungsquelle oder an einen unmittelbar an die Hochspannungsquelle angeschlossenen Hochvoltverteiler angeschlossen werden, die nicht kurzfristig hohe Leistung benötigen, z.B. eine Hochvoltkomponente ohne leistungselektronische Elemente.
Hierdurch ergibt sich in vorteilhafter Weise, dass der Kapazitätswert und somit auch ein Bauraumbedarf der zentralen Zwischenkreiskapazität reduziert werden kann.

Es ist denkbar, dass das HV-Bordnetzsystem mehrere Hochspannungsquellen und mehrere Zwischenkreise umfasst, die jeweils an eine der Hochspannungsquellen angeschlossen sind. Z.B. kann das HV-Bordnetzsystem ein erstes Teilsystem mit einer ersten Hochspannungsquelle und einer zentralen Zwischenkreiskapazität und einer ersten Menge von mindestens zwei Hochvoltkomponenten umfassen, wobei die Hochvoltkomponenten der ersten Menge wie vorhergehend erläutert mit der zentralen Zwischenkreiskapazität und diese mit der ersten Hochspannungsquelle verbunden sind. Weiter kann das HV-Bordnetzsystem ein weiteres Teilsystem mit einer weiteren Hochspannungsquelle und eine weiteren Menge umfassend mindestens eine Hochvoltkomponente umfassen, wobei die mindestens eine Hochvoltkomponente der weiteren Menge mit der weiteren Hochspannungsquelle verbunden ist. Das weitere Teilsystem kann insbesondere keine zentrale Zwischenkreiskapazität umfassen.

Weiter vorgeschlagen wird ein Verfahren zur Herstellung eines HV-Bordnetzsystems, wobei eine Hochspannungsquelle, eine zentrale Zwischenkreiskapazität und mindestens zwei Hochvoltkomponenten bereitgestellt werden. Weiter werden die Pluspolanschlüsse der Hochvoltkomponenten jeweils mit dem Pluspolanschluss der zentralen Zwischenkreiskapazität und die Minuspolanschlüsse der Hochvoltkomponenten jeweils mit den Minuspolanschluss der zentralen Zwischenkreiskapazität verbunden.

Weiter werden Anschlüsse der zentralen Zwischenkreiskapazität und Anschlüsse mindestens einer der Hochvoltkomponenten über eine niederinduktive Leiteranordnung elektrisch verbunden, deren Induktivitätsbelag kleiner als 0,2 µH/m ist, wobei diese mindestens eine Hochvoltkomponente derart mit der zentralen Zwischenkreiskapazität elektrisch verbunden wird, dass eine aus einer Anschlusskapazität dieser Hochvoltkomponente und einer Verbindungskapazität der elektrischen Verbindung zwischen der Hochvoltkomponente und der zentralen Zwischenkreiskapazität resultierende Kapazität kleiner als oder gleich 100 µF ist.

Das vorgeschlagene Verfahren ermöglicht in vorteilhafter Weise die Herstellung eines HV-Bordnetzsystems gemäß einer der in dieser Offenbarung beschriebenen Ausführungsform mit den ebenfalls beschriebenen technischen Vorteilen.

Wie vorhergehend erläutert kann die zentrale Zwischenkreiskapazität in die Hochspannungsquelle integriert werden. Alternativ können die Anschlüsse der Hochspannungsquelle unmittelbar mit Anschlüssen der zentralen Zwischenkreiskapazität elektrisch verbunden werden. Weiter alternativ können Anschlüsse der Hochspannungsquelle mit Anschlüssen der zentralen Zwischenkreiskapazität über eine niederinduktive Leiteranordnung elektrisch verbunden werden, deren Induktivitätsbelag kleiner als oder gleich 0,2 µH/m ist.

In einer weiteren Ausführungsform wird eine, für ein HV-Bordnetzsystem ohne zentrale Zwischenkreiskapazität ausgelegte, Hochvoltkomponente mit einer Ursprungskapazität bereitgestellt, wobei die Ursprungskapazität um ein vorbestimmtes Maß reduziert wird und die Hochvoltkomponente dann mit der derart reduzierten Kapazität an das HV-Bordnetzsystem angeschlossen wird, wobei die Kapazität der zentralen Zwischenkreiskapazität um das vorbestimmte Maß erhöht wird. Mit anderen Worten wird also eine Kapazität der Hochvoltkomponente in die zentrale Zwischenkreiskapazität verlagert. Hierdurch ergibt sich in vorteilhafter Weise ein zuverlässiger Betrieb des HV-Bordnetzsystems bei gleichzeitiger Reduktion der wie vorhergehend erläuterten unerwünschten Ausgleichsströme.

Die Erfindung wird anhand von Ausführungsbeispielen näher erläutert. Die Figuren zeigen:
- Fig. 1: ein schematisches Blockschaltbild eines erfindungsgemäßen HV-Bordnetzsystems in einer ersten Ausführungsform,
- Fig. 2: ein schematisches Blockschaltbild eines erfindungsgemäßen HV-Bordnetzsystems gemäß einer weiteren Ausführungsform,
- Fig. 3: ein schematisches Blockschaltbild eines erfindungsgemäßen HV-Bordnetzsystems gemäß einer weiteren Ausführungsform,
- Fig. 4: ein schematisches Blockschaltbild eines erfindungsgemäßen HV-Bordnetzsystems gemäß einer weiteren Ausführungsform,
- Fig. 5: ein schematisches Flussdiagramm eines erfindungsgemäßen Verfahrens zur Herstellung eines HV-Bordnetzsystems,
- Fig. 6: ein schematisches Flussdiagramm eines erfindungsgemäßen Verfahrens zur Herstellung eines HV-Bordnetzsystems gemäß einer weiteren Ausführungsform und
- Fig. 7: ein schematischer Querschnitt durch eine niederinduktive Leiteranordnung. Nachfolgend bezeichnen gleiche Bezugszeichen Elemente mit gleichen oder ähnlichen technischen Merkmalen.

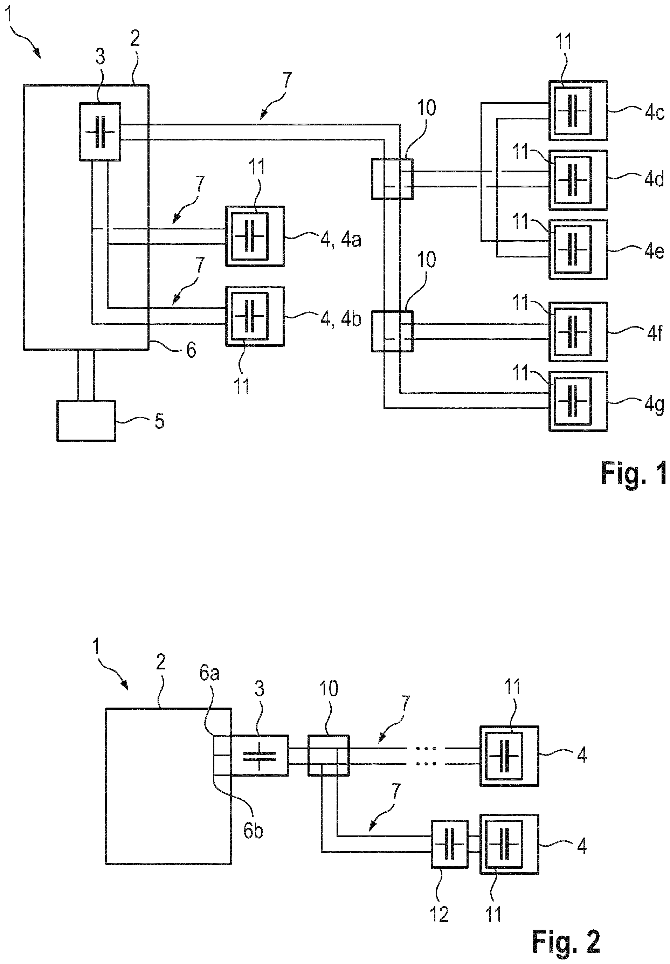

Fig. 1 zeigt ein schematisches Blockschaltbild eines erfindungsgemäßen HV-Bordnetzsystems 1 eines nicht dargestellten Fahrzeugs. Das HV-Bordnetzsystem 1 umfasst eine als Hochvoltbatterie 2 ausgebildete Hochspannungsquelle sowie eine in die Hochvoltbatterie 2 integrierte zentrale Zwischenkreiskapazität 3. Dargestellt sind verschiedene Hochvoltkomponenten 4, wobei eine erste Hochvoltkomponente 4a eine Hinterrad-Antriebseinrichtung, eine zweite Hochvoltkomponente 4b eine Vorderrad-Antriebseinrichtung, eine dritte Hochvoltkomponente 4c eine Hochvolt-Heizeinrichtung, eine vierte Hochvoltkomponente 4d ein elektrischer Klimakompressor, eine fünfte Hochvoltkomponente 4e eine Hochvolt-Batterie-Heizeinrichtung, eine sechste Hochvoltkomponente 4f ein Gleichspannungswandler und eine siebte Hochvoltkomponente 4g ein Ladegerät ist. Dargestellt ist, dass die Pluspolanschlüsse der Hochvoltkomponenten 4, 4a, ..., 4g jeweils mit einem Pluspolanschluss der zentralen Zwischenkreiskapazität 3 und die Minuspolanschlüsse der Hochvoltkomponenten 4, 4a, ..., 4g jeweils mit dem Minuspolanschluss der zentralen Zwischenkreiskapazität 3 verbunden sind.

Weiter dargestellt sind Hochvoltverteilereinrichtungen 10 in denen Plusleitungen und/oder Minusleitungen von mehreren Teilkreisen des Zwischenkreises zusammengeführt werden. So sind die dritte, vierte und fünfte Hochvoltkomponente 4c, 4d, 4e an einen ersten Teilkreis und die sechste und siebte Hochvoltkomponente 4f, 4g an einen weiteren Teilkreis angeschlossen, die in den Hochvoltverteilereinrichtungen 10 zusammengeführt werden.

Dargestellt ist ebenfalls eine niederinduktive Leiteranordnung 7, über die die Hochvoltkomponenten 4, 4a, ..., 4g jeweils miteinander und auch mit der zentralen Zwischenkreiskapazität 3 verbunden sind. Ein Induktivitätsbelag dieser niederinduktiven Leiteranordnung 7 ist kleiner als 0,2 µH/m.

Weiter sind die Hochvoltkomponenten 4, 4a,..., 4g jeweils derart mit der zentralen Zwischenkreiskapazität 3 elektrisch verbunden sind, dass eine aus einer Anschlusskapazität 11 der Hochvoltkomponente 4, 4a,..., 4g und einer in Fig. 1 nicht dargestellten Verbindungskapazität der elektrischen Verbindung zwischen der Hochvoltkomponente 4, 4a,..., 4g und der zentralen Zwischenkreiskapazität 3 resultierende Kapazität kleiner als oder gleich 100 µF ist.

Die Anschlusskapazitäten 11 der Hochvoltkomponenten 4, 4a, ..., 4g können hierbei jeweils kleiner als 100 µF, vorzugsweise kleiner als 10 µF, sein.

Weiter dargestellt ist eine Gleichspannungs-Ladedose 5, die zum Laden der Hochvoltbatterie 2 mit entsprechenden Ladeanschlüssen dieser Hochvoltbatterie 2 verbunden werden kann.

Es ist ersichtlich, dass die zentrale Zwischenkreiskapazität 3 in ein Gehäuse 6 der Hochvoltbatterie 2 integriert ist. So ist es möglich, dass die Hochvoltkomponenten 4, 4a, ..., 4g jeweils über ein Trennschaltelement (nicht dargestellt), insbesondere ein als Batterieschütz ausgebildetes Trennschaltelement, mit der zentralen Zwischenkreiskapazität 3 verbunden sind. Wird das Trennschaltelement in einen geöffneten Zustand versetzt, so sind auch die Hochvoltkomponenten 4, 4a, ..., 4g nicht mit der zentralen Zwischenkreiskapazität 3 und der Hochvoltbatterie 2 verbunden.

Die Hinterrad- und Vorderrad-Antriebseinrichtungen 4a, 4b können hierbei jeweils einen Umrichter umfassen, der die von der Hochvoltbatterie 2 bereitgestellte Gleichspannung in eine Wechselspannung zum Betrieb einer elektrischen Maschine (Traktionsmaschine) umwandelt.

Fig. 2 zeigt ein schematisches Blockschaltbild eines erfindungsgemäßen HV-Bordnetzsystems 1 in einer weiteren Ausführungsform. Das HV-Bordnetzsystem 1 umfasst wiederum eine Hochvoltbatterie 2 und eine zentrale Zwischenkreiskapazität 3, wobei dargestellt ist, dass Anschlüsse 6a, 6b (Pluspolanschluss, Minuspolanschluss) der Hochvoltbatterie 2 unmittelbar mit nicht dargestellten Anschlüssen der zentralen Zwischenkreiskapazität 3 elektrisch verbunden sind. Ein Pluspolanschluss 6a der Hochvoltbatterie 2 kann hierbei das Potential des Pluspols der Hochvoltbatterie 2 zum Abgriff bereitstellen. Entsprechend kann der Minuspolanschluss 6b das Potential eines Minuspols der Hochvoltbatterie 2 zum Abgriff bereitstellen. Weiter dargestellt sind Hochvoltkomponenten 4 des HV-Bordnetzsystems 1, deren Pluspolanschlüsse jeweils mit dem Pluspolanschluss der zentralen Zwischenkreiskapazität 3 und deren Minuspolanschlüsse jeweils mit dem Minuspolanschluss der zentralen Zwischenkreiskapazität 3 verbunden sind.

E dass eine der Hochvoltkomponenten 4 über eine Verbindungskapazität 12 mit der zentralen Zwischenkreiskapazität 3 verbunden ist.

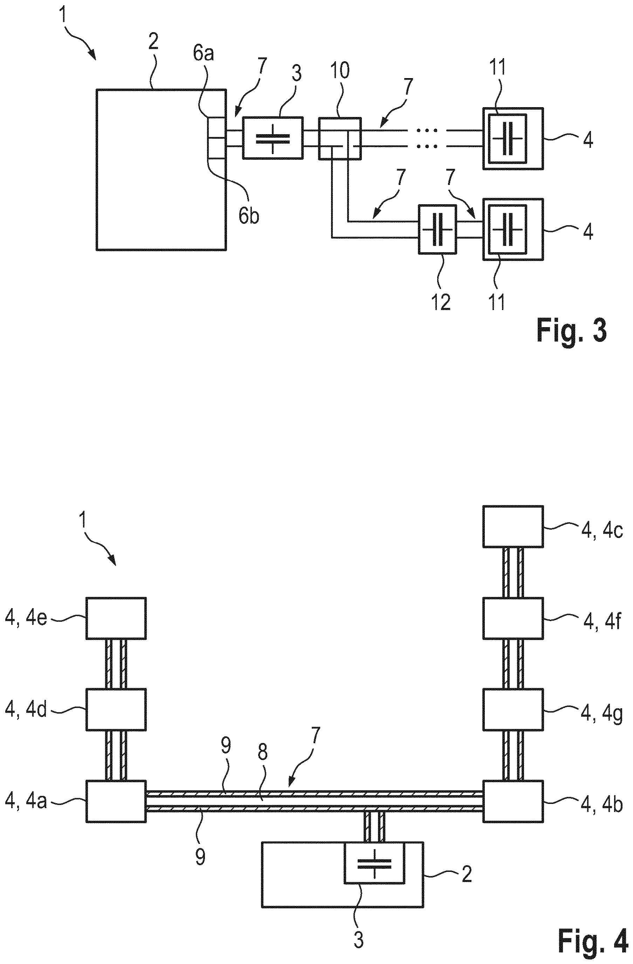

Fig. 3 zeigt ein schematisches Blockschaltbild eines erfindungsgemäßen HV-Bordnetzsystems 1 in einer weiteren Ausführungsform. Das HV-Bordnetzsystem 1 umfasst wiederum eine Hochvoltbatterie 2 und eine zentrale Zwischenkreiskapazität 3, wobei die Anschlüsse der Hochvoltbatterie 6a, 6b mit den Anschlüssen der zentralen Zwischenkreiskapazität 3 jeweils über eine niederinduktive Leiteranordnung 7 elektrisch verbunden sind, wobei ein Induktivitätsbelag dieser niederinduktiven Leiteranordnung kleiner als oder gleich 0,2 µH/m ist.

Schematisch dargestellt ist, dass eine der Hochvoltkomponenten 4 über eine Verbindungskapazität 12 mit der zentralen Zwischenkreiskapazität 3 verbunden ist.

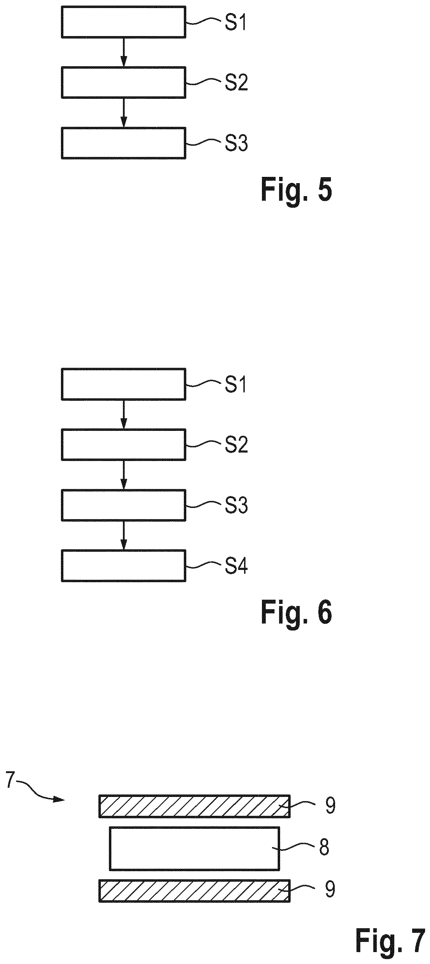

Weiter sind bei der in Fig. 1 und der in Fig. 2 und der in Fig. 3 dargestellten Ausführungsform des HV-Bordnetzsystems 1 die Hochvoltkomponenten 4, 4a, ..., 4g jeweils über eine niederinduktive Leiteranordnung 7 (siehe Fig. 7) mit den Anschlüssen der zentralen Zwischenkreiskapazität 3 elektrisch verbunden sind und die Hochvoltkomponenten 4, 4a,..., 4g jeweils derart mit der zentralen Zwischenkreiskapazität 3 elektrisch verbunden sind, dass eine aus einer Anschlusskapazität 11 der Hochvoltkomponente 4, 4a,..., 4g und einer Verbindungskapazität der elektrischen Verbindung zwischen der Hochvoltkomponente 4, 4a,..., 4g und der zentralen Zwischenkreiskapazität 3 resultierende Kapazität kleiner als oder gleich 100 µF ist.

Fig. 4 zeigt ein weiteres schematisches Blockschaltbild eines HV-Bordnetzsystems 1 eines Fahrzeugs, welches eine Hochvoltbatterie 2 und eine in die Hochvoltbatterie 2 integrierte zentrale Zwischenkreiskapazität 3 umfasst. Weiter dargestellt sind Hochvoltkomponenten 4, 4a, ..., 4g, die entsprechend den in Fig. 1 dargestellten Hochvoltkomponenten 4, 4a ..., 4g ausgebildet sind.

Dargestellt ist ebenfalls eine niederinduktive Leiteranordnung 7, über die die Hochvoltkomponenten 4, 4a, ..., 4g jeweils miteinander und auch mit der zentralen Zwischenkreiskapazität 3 verbunden sind. Somit sind die Hochvoltkomponenten 4, 4a, ..., 4g über die Leiteranordnung 7 an das HV-Bordnetzsystem 1 und die zentrale Zwischenkreiskapazität 3 angeschlossen. Die Leiteranordnung 7 umfasst eine Flachleitung 8 von einem ersten Leitungstyp und zwei Flachleitungen 9 von einem zweiten Leitungstyp, wobei die Flachleitungen 9 des zweiten Leitungstyps schraffiert dargestellt sind. Schematisch dargestellt ist, dass die Flachleitungen 8, 9 derart übereinander angeordnet sind, dass die Flachleitung 8 vom ersten Leitungstyp und die Flachleitungen 9 vom zweiten Leitungstyp abwechselnd übereinander angeordnet sind, wobei jeweils außen eine Flachleitung 9 vom zweiten Leitungstyp angeordnet ist. Es ist möglich, dass die Flachleitung 8 vom ersten Leitungstyp zur Verbindung von Pluspolanschlüssen und die Flachleitungen 9 vom zweiten Leitungstyp zur Verbindung von Minuspolanschlüssen im HV-Bordnetzsystem 1 dienen. Allerdings ist auch vorstellbar, dass die Flachleitung 8 vom ersten Leitungstyp zur Verbindung von Minuspolanschlüssen und die Flachleitungen 9 vom zweiten Leitungstyp zur Verbindung von Pluspolanschlüssen im HV-Bordnetzsystem 1 dienen.

In den in Fig. 1 bis Fig. 4 dargestellten Ausführungsformen ist dargestellt, dass die Anschlüsse aller Hochvoltkomponenten 4, 4a,... , 4g jeweils mit den Anschlüssen der Zwischenkreiskapazität 3 verbunden sind. Es ist jedoch auch vorstellbar, dass nur die Anschlüsse der ersten und der zweiten Hochvoltkomponente 4a, 4b mit den Anschlüssen der Zwischenkreiskapazität 3 verbunden sind, während die Anschlüsse der weiteren, verbleibenden Hochvoltkomponenten 4c,... , 4g direkt, also nicht über die zentrale Zwischenkreiskapazität 3, mit den Anschlüssen der Hochvoltbatterie 2 verbunden sind. Dies kann insbesondere bei einem Allrad-Fahrzeug der Fall sein.

Ebenfalls ist dargestellt, dass eine Hochvoltbatterie 2 vorhanden ist. Es ist jedoch auch möglich, dass anstelle der Hochvoltbatterie 2 ein Generator als Hochspannungsquelle verwendet wird, der von einer Verbrennungskraftmaschine zur Spannungserzeugung angetrieben wird. In diesem Fall kann das HV-Bordnetzsystem keine Hochvoltbatterie 2 umfassen.

Fig. 5 zeigt ein schematisches Flussdiagramm eines Verfahrens zur Herstellung eines Hochvolt-Bordnetzsystems 1 (siehe Fig. 1). In einem ersten Schritt S1 werden eine Hochvoltbatterie 2, eine zentrale Zwischenkreiskapazität 3 und mindestens zwei Hochvoltkomponenten 4 bereitgestellt. In einem zweiten Schritt S2 werden die Pluspolanschlüsse der Hochvoltkomponenten 4 jeweils mit dem Pluspolanschluss der zentralen Zwischenkreiskapazität 3 und die Minuspolanschlüsse der Hochvoltkomponenten 4 jeweils mit dem Minuspolanschluss der zentralen Zwischenkreiskapazität 3 verbunden. Hierbei werden die Anschlüsse der zentralen Zwischenkreiskapazität 3 und Anschlüsse der Hochvoltkomponenten 4, 4a, ..., 4g jeweils über eine niederinduktive Leiteranordnung 7 elektrisch verbunden, deren Induktivitätsbelag kleiner als 0,2 µH/m ist, wobei die Hochvoltkomponenten zusätzlich jeweils derart mit der zentralen Zwischenkreiskapazität 3 elektrisch verbunden werden, dass eine aus einer Anschlusskapazität der Hochvoltkomponente 4, 4a,... , 4g und einer Verbindungskapazität der elektrischen Verbindung zwischen der Hochvoltkomponente 4, 4a,..., 4g und der zentralen Zwischenkreiskapazität 3 resultierende Kapazität kleiner als oder gleich 100 µF ist.

Weiter kann die zentrale Zwischenkreiskapazität 3 in die Hochvoltbatterie 2 integriert sein, wobei in einem solchen Fall ein dritter Schritt S3 des Verfahrens entfällt. Alternativ können in einem dritten Schritt S3 die Anschlüsse der Hochvoltbatterie 2 unmittelbar mit den Anschlüssen der zentralen Zwischenkreiskapazität 3 elektrisch verbunden werden. Weiter alternativ können Anschlüsse der Hochvoltbatterie 2 mit Anschlüssen der zentralen Zwischenkreiskapazität 3 über eine niederinduktive Leiteranordnung 7 (siehe Fig. 7) elektrisch verbunden werden. Allerdings ist der dritte Schritt S3 nicht zwingend Teil des erfindungsgemäßen Verfahrens.

Fig. 6 zeigt ein schematisches Flussdiagramm eines Verfahrens zur Herstellung eines HV-Bordnetzsystems 1 (siehe Fig. 1) gemäß einer weiteren Ausführungsform. Hierbei entspricht ein erster Schritt S1 dem ersten Schritt S1 der in Fig. 5 dargestellten Ausführungsform. In einem zweiten Schritt S2 wird eine Ursprungskapazität, also der Wert dieser Kapazität, der im ersten Schritt S1 bereitgestellten Hochvoltkomponente 4 um ein vorbestimmtes Maß reduziert. Weiter wird die Kapazität, also der Wert dieser Kapazität, der zentralen Zwischenkreiskapazität 3 um dieses vorbestimmte Maß erhöht. Ein dritter Schritt S3 und ein vierter Schritt S4 des in Fig. 6 dargestellten Verfahrens entsprechen jeweils dem zweiten Schritt S2 und dem dritten Schritt S3 des in Fig. 5 dargestellten Verfahrens.

Fig. 7 zeigt einen schematischen Querschnitt durch eine niederinduktive Leiteranordnung 7. Diese umfasst genau eine Flachleitung 8 eines ersten Leitungstyps und zwei Flachleitungen 9 eines zweiten Leitungstyps, wobei die Flachleitungen 8, 9 derart übereinander angeordnet sind, dass Flachleitungen 8, 9 vom ersten Leitungstyp und vom zweiten Leitungstyp abwechselnd übereinander angeordnet sind, wobei jeweils außen eine Flachleitung 9 vom zweiten Leitungstyp angeordnet ist. Weiter ist in Fig. 7 dargestellt, dass die Leitungsquerschnittsfläche der Flachleitung 8 vom ersten Leitungstyp gleich der Summe der Leitungsquerschnittsfläche der beiden Flachleitungen 9 vom zweiten Leitungstyp ist.

### Bezugszeichenliste

- 1: HV-Bordnetzsystem
- 2: Hochvoltbatterie
- 3: zentrale Zwischenkreiskapazität
- 4: Hochvoltkomponente
- 4a: Hinterrad-Antriebseinrichtung
- 4b: Vorderrad-Antriebseinrichtung
- 4c: Hochvolt-Heizeinrichtung
- 4d: elektrischer Klimakompressor
- 4e: Hochvolt-Batterie-Heizeinrichtung
- 4f: Gleichspannungswandler
- 4g: Ladegerät
- 5: Ladedose
- 6a: Pluspolanschluss
- 6b: Minuspolanschluss
- 7: niederinduktive Leiteranordnung
- 8: Flachleitung vom ersten Leitungstyp
- 9: Flachleitung vom zweiten Leitungstyp
- 10: Hochvoltverteilereinrichtung
- 11: Anschlusskapazität
- 12: Verbindungskapazität
- S1: erster Schritt
- S2: zweiter Schritt
- S3: dritter Schritt
- S4: vierter Schritt

## Patentansprüche

1. HV-Bordnetzsystem eines Fahrzeugs, wobei das HV-Bordnetzsystem (1) eine Hochspannungsquelle (2) , eine zentralen Zwischenkreiskapazität (3) und mindestens zwei Hochvoltkomponenten (4, 4a, ..., 4g) umfasst, wobei die Pluspolanschlüsse der Hochvoltkomponenten (4, 4a, ..., 4g) jeweils mit dem Pluspolanschluss der zentralen Zwischenkreiskapazität (3) und die Minuspolanschlüsse der Hochvoltkomponenten (4, 4a, ..., 4g) jeweils mit dem Minuspolanschluss der zentralen Zwischenkreiskapazität (3) verbunden sind,
**dadurch gekennzeichnet, dass**
Anschlüsse der zentralen Zwischenkreiskapazität (3) und die Anschlüsse mindestens einer der Hochvoltkomponenten (4, 4a, ..., 4g) über eine niederinduktive Leiteranordnung (7) elektrisch verbunden sind, deren Induktivitätsbelag kleiner als 0,2 µH/m ist, wobei diese mindestens eine Hochvoltkomponente (4, 4a,..., 4g) derart mit der zentralen Zwischenkreiskapazität (3) elektrisch verbunden ist, dass eine aus einer Anschlusskapazität der Hochvoltkomponente (4, 4a,..., 4g) und einer Verbindungskapazität der elektrischen Verbindung zwischen der Hochvoltkomponente (4, 4a,..., 4g) und der zentralen Zwischenkreiskapazität (3) resultierende Kapazität kleiner als oder gleich 100 µF ist.

2. HV-Bordnetzsystem nach Anspruch 1, **dadurch gekennzeichnet, dass** eine Anschlusskapazität mindestens einer Hochvoltkomponente (4, 4a, ..., 4g) kleiner als 100 µF ist.

3. HV-Bordnetzsystem nach einem der vorangegangenen Ansprüche, **dadurch gekennzeichnet, dass** mindestens eine der Hochvoltkomponente (4, 4a) einen Traktionsumrichter umfasst, wobei eine weitere der Hochvoltkomponenten (4, 4b, ..., 4g) einen Gleichspannungswandler (4f), ein Ladegerät (4g), einen elektrischer Klimakompressor (4d) oder eine Heizeinrichtung (4c, 4e) umfasst.

4. HV-Bordnetzsystem nach einem der vorangegangenen Ansprüche, **dadurch gekennzeichnet, dass** mindestens ein Anschluss der zentralen Zwischenkreiskapazität (3) über ein Trennschaltelement mit einem Anschluss der Hochspannungsquelle verbunden ist.

5. HV-Bordnetzsystem nach einem der Ansprüche 1 bis 3, **dadurch gekennzeichnet, dass** mindestens ein Anschluss der zentralen Zwischenkreiskapazität (3) dauerhaft mit einem Anschluss der Hochspannungsquelle verbunden ist, wobei die Hochvoltkomponenten (4, 4a, ..., 4g) über mindestens ein Trennschaltelement mit dem Anschluss der Hochspannungsquelle verbunden sind.

6. HV-Bordnetzsystem nach einem der vorangegangenen Ansprüche, **dadurch gekennzeichnet, dass** die zentrale Zwischenkreiskapazität (3) in die Hochspannungsquelle integriert ist oder dass Anschlüsse der Hochspannungsquelle unmittelbar mit Anschlüssen der zentralen Zwischenkreiskapazität (3) elektrisch verbunden sind oder dass Anschlüsse der Hochspannungsquelle mit Anschlüssen der zentralen Zwischenkreiskapazität (3) über eine niederinduktive Leiteranordnung (7) elektrisch verbunden sind, deren Induktivitätsbelag kleiner als oder gleich 0,2 µH/m ist oder dass die zentralen Zwischenkreiskapazität (3) in eine Hochvoltkomponente oder in einer Hochvoltverteileinrichtung integriert ist.

7. HV-Bordnetzsystem nach einem der vorangegangenen Ansprüche, **dadurch gekennzeichnet, dass** die niederinduktive Leiteranordnung (7) mindestens (2n+1) Flachleitungen aufweist, wobei davon n Flachleitungen (8) von einem ersten Leitungstyp und n+1 Flachleitungen (9) von einem zweiten Leitungstyp sind und wobei die (2n+1) Flachleitungen (8, 9) derart übereinander angeordnet sind, dass die Flachleitungen (8, 9) vom ersten Leitungstyp und vom zweiten Leitungstyp abwechselnd übereinander angeordnet sind, wobei jeweils außen eine Flachleitung (9) vom zweiten Leitungstyp angeordnet ist.

8. HV-Bordnetzsystem nach einem der vorangegangenen Ansprüche, **dadurch gekennzeichnet, dass** mindestens eine weitere Hochvoltkomponente oder eine Hochvoltverteilereinrichtung (10) unmittelbar an die Hochspannungsquelle (2) angeschlossen ist.

9. Verfahren zur Herstellung eines HV-Bordnetzsystems (1), wobei eine Hochspannungsquelle (2), eine zentrale Zwischenkreiskapazität (3) und mindestens zwei Hochvoltkomponenten (4, 4a, ..., 4g) bereitgestellt werden, wobei die Pluspolanschlüsse der Hochvoltkomponenten (4, 4a, ..., 4g) jeweils mit dem Pluspolanschluss der zentralen Zwischenkreiskapazität (3) und die Minuspolanschlüsse der Hochvoltkomponenten (4, 4a, ..., 4g) jeweils mit dem Minuspolanschluss der zentralen Zwischenkreiskapazität (3) verbunden werden, wobei Anschlüsse der zentralen Zwischenkreiskapazität (3) und Anschlüsse mindestens einer der Hochvoltkomponenten (4, 4a, ..., 4g) über eine niederinduktive Leiteranordnung (7) elektrisch verbunden werden, deren Induktivitätsbelag kleiner als 0,2 µH/m ist, wobei diese mindestens eine Hochvoltkomponente (4, 4a,..., 4g) derart mit der zentralen Zwischenkreiskapazität (3) elektrisch verbunden wird, dass eine aus einer Anschlusskapazität der Hochvoltkomponente (4, 4a,..., 4g) und einer Verbindungskapazität der elektrischen Verbindung zwischen der Hochvoltkomponente (4, 4a,..., 4g) und der zentralen Zwischenkreiskapazität (3) resultierende Kapazität kleiner als oder gleich 100 µF ist.

10. Verfahren nach Anspruch 9, **dadurch gekennzeichnet, dass** eine Hochvoltkomponente (4, 4a, ..., 4g) mit einer Ursprungs-Kapazität bereitgestellt wird, wobei die Ursprungs-Kapazität um ein vorbestimmtes Maß reduziert wird und die Hochvoltkomponente (4, 4a, ..., 4g) mit der derart reduzierten Kapazität an das HV-Bordnetzsystem (1) angeschlossen wird, wobei die Kapazität der zentralen Zwischenkreiskapazität (3) um das vorbestimmte Maß erhöht wird.
